**Europäisches Patentamt**

**European Patent Office**

**Office européen des brevets**

(11) Veröffentlichungsnummer: **0 057 240**
A1

## (12) EUROPÄISCHE PATENTANMELDUNG

(21) Anmeldenummer: **81100726.9**

(22) Anmeldetag: **02.02.81**

(51) Int. Cl.³: **B 62 M 3/08**

(43) Veröffentlichungstag der Anmeldung: **11.08.82**
**Patentblatt 82/32**

(84) Benannte Vertragsstaaten: **BE DE FR GB IT NL**

(71) Anmelder: **Ceresoli, Aldo, Weinsberger Strasse 6,
D-7101 Erlenbach (DE)**

(72) Erfinder: **Ceresoli, Aldo, Weinsberger Strasse 6,
D-7101 Erlenbach (DE)**

(74) Vertreter: **Bunke, Max, Dipl.-Ing. et al, Patentanwälte
Prinz, Bunke & Partner Lessingstrasse 9,
D-7000 Stuttgart 1 (DE)**

(54) **Pedal für Rennfahrräder.**

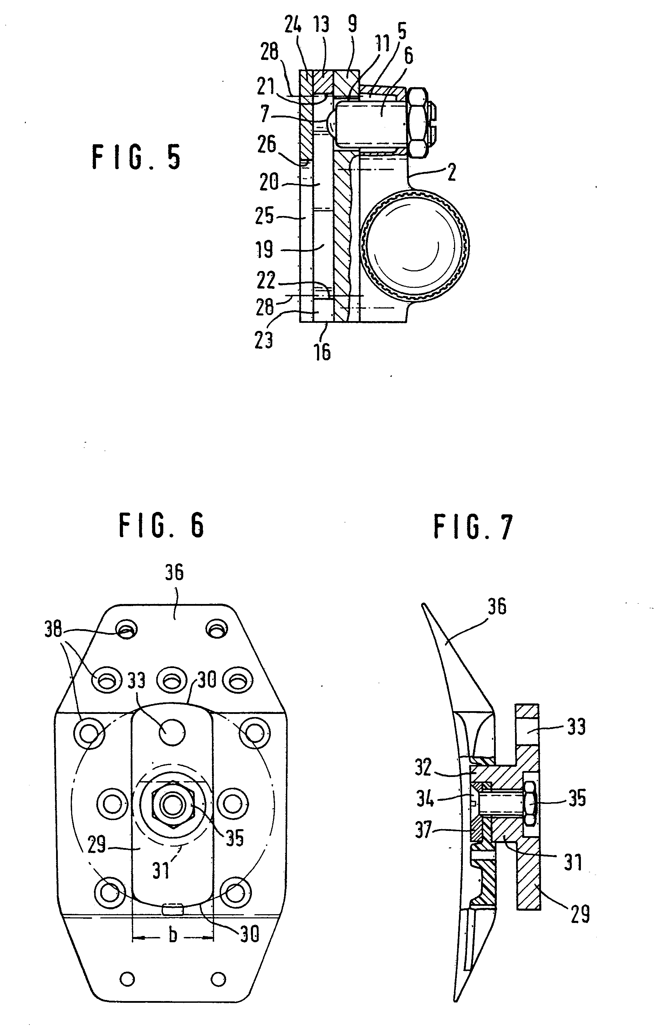

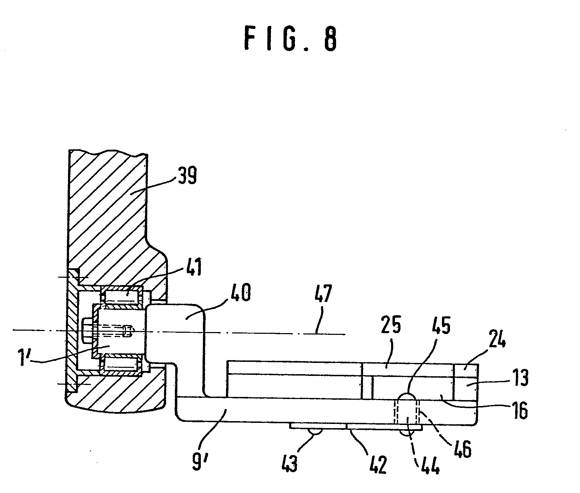

(57) Ein Pedal für Rennfahrräder ist aufgeteilt in eine untere Einheit (2), die an der Tretkurbel des Fahrrades drehbar gelagert ist, und eine obere Einheit, die mit der Sohle des Schuhes des Rennfahrers verbindbar ist; die Verbindung beider Einheiten ist als Einsteckrastverbindung so ausgebildet, daß sie eine Fahrlage der Einheiten zueinander ermöglicht, in der die untere Einheit von der oberen formschlüssig mitgenommen wird, und eine Trennlage, in der die Einheiten wenigstens in einer Richtung unter Überwindung der Rastkraft voneinander trennbar sind. Statt um eine in den Drehkurbelarm fest eingeschraubte Pedalachse kann die untere Pedaleinheit mittels eines Lagerzapfens im Drehkurbelarm leicht drehbar gelagert und so ausgebildet sein, daß ihr Schwerpunkt unterhalb der geometrischen Drehachse (47) und wenigstens annähernd in einer durch diese gelegten senkrechten Ebene liegt. Auf Fig. 7 und 8 wird Bezug genommen.

0057240

Anmelder:

Aldo Ceresoli
Weinsberger Straße 6
7101 Erlenbach

Vertreter:

Patentanwälte
Dipl.-Ing. Max Bunke
Dipl.-Chem. Dr. H. Bunke
Dipl.-Phys. H. Degwert
Lessingstr. 9, Postfach 11 86
7000 Stuttgart 1

Stuttgart, den 26.1.1981

P 2584 Euro 10/33

## Pedal für Rennfahrräder

Die Erfindung betrifft ein für die Verwendung an Rennfahrrädern bestimmtes Pedal.

Es ist bekannt, die Pedale von Rennfahrrädern mit den Schuhen der Fahrer durch Riemen zu verbinden, damit bei den hohen Geschwindigkeiten, die bei Rennen gefahren werden und die bis zu 80 km/h betragen, die Füße des Fahrers nicht unbeabsichtigt die Fühlung mit den Pedalen verlieren. Das Anschnallen und das Lösen der Riemen, das ausgeführt werden muß, wenn schon oder noch gefahren wird, bereitet Schwierigkeiten; der Fahrer muß sich herunterbeugen und kann kippen oder während der Beschäftigung mit dem Anschnallen auf seinen Vordermann auffahren.

Der Erfindung liegt die Aufgabe zugrunde, ein Rennradpedal zu schaffen, das es gestattet, diese Schwierigkeiten zu vermeiden und im Gefahrenfall und insbesondere bei Stürzen ein leichtes Lösen der Verbindung zwischen dem Fahrerschuh und den auf der Pedalachse festen Teilen halb selbsttätig zu ermöglichen, die Unfallgefahr also vermindert.

Diese Aufgabe wird gemäß der Erfindung durch ein Pedal für Rennfahrräder gelöst, das gekennzeichnet ist durch die Aufteilung in zwei die Antriebskraft vom Fuß des Fahrers auf die Tretkurbel übertragende, leicht lösbar miteinander verbundene Einheiten, von denen die erste, untere um eine rechtwinklig zum Tretkurbelarm verlaufende geometrische Achse drehbar gelagert ist, während die zweite, obere, für die Befestigung am Schuh des Fahrers, z. B. an die Schuhsohle anschraubbar ausgebildet ist, sowie dadurch, daß die Verbindung beider Einheiten als Einsteckrastverbindung derart ausgebildet ist, daß sie  im eingesteckten Zustand zwei Lagen der Einheiten zueinander ermöglicht, nämlich eine erste Lage der Einheiten zueinander (Fahrlage), in der die Einheiten in beiden Richtungen quer zur Pedaldrehachse formschlüssig verbunden sind, und eine zweite Lage der Einheiten zueinander (Trennlage), in der die Einheiten wenigstens in einer Richtung unter Überwindung der Rastkraft voneinander trennbar sind.

Gemäß einer Weiterbildung der Erfindung ist die Grundplatte der unteren Einheit von einem an einer Abkröpfung angebrachten Lagerzapfen abgewinkelt, der im Ende eines Tretkurbelarmes in einem Wälzlager, vorzugsweise Zylinderwalzenlager gelagert ist, wobei der Schwerpunkt der unteren Einheit in einer durch die geometrische Drehachse des Lagerzapfens gelegte, auf der Grundplatte senkrechten Ebene oder dieser möglichst nahe und außerdem in einem Abstand unterhalb dieser geometrischen Drehachse liegt.

Der Schwerpunkt der unteren Pedaleinheit liegt also unterhalb der geometrischen Drehachse und zwar so, daß sich die untere Pedaleinheit selbsttätig immer in eine Lage einstellt, in der die Grundplatte und damit auch der Einsteckraum für den Schlitten der oberen Pedaleinheit wenigstens annähernd waagerecht liegen. Hierdurch wird das erste und wiederholte Einführen des Schlittens der an der Sohle des Fahrerschuhs befestigten oberen Pedaleinheit erleichtert; es wird vermieden, daß die untere Pedaleinheit in eine Stellung kippt, aus der sie erst in eine annähernd waagerechte Lage zurückbewegt werden muß, bevor sich der Schlitten einführen läßt.

Sonstige Weiterbildungen der Erfindung und Einzelheiten ergeben sich aus der folgenden Beschreibung zweier Ausführungsbeispiele anhand der Zeichnung in Verbindung mit den Unteransprüchen.

Fig. 1 ist eine Draufsicht auf das auf der Pedalachse drehbar gelagerte Tragelement einer ersten Ausführungsform,

Fig. 2 eine Draufsicht auf eine auf dem in Fig. 1 dargestellten Tragelement zu befestigende Grundplatte,

Fig. 3 eine Draufsicht auf eine auf die Grundplatte nach Fig. 2 aufzulegende Zwischenplatte und

Fig. 4 eine Draufsicht auf eine auf die vorhergenannten Platten aufzulegende Deckplatte.

Fig. 5 zeigt einen quer zur Pedalachse durch die zusammengesetzte untere Pedaleinheit gelegten Schnitt.

Fig. 6 ist eine Draufsicht auf die obere Pedaleinheit und

Fig. 7 ein Mittelschnitt durch die letztere.

Fig. 8 ist ein Schnitt durch die Lagerung der unteren Pedaleinheit eines zweiten Ausführungsbeispiels.

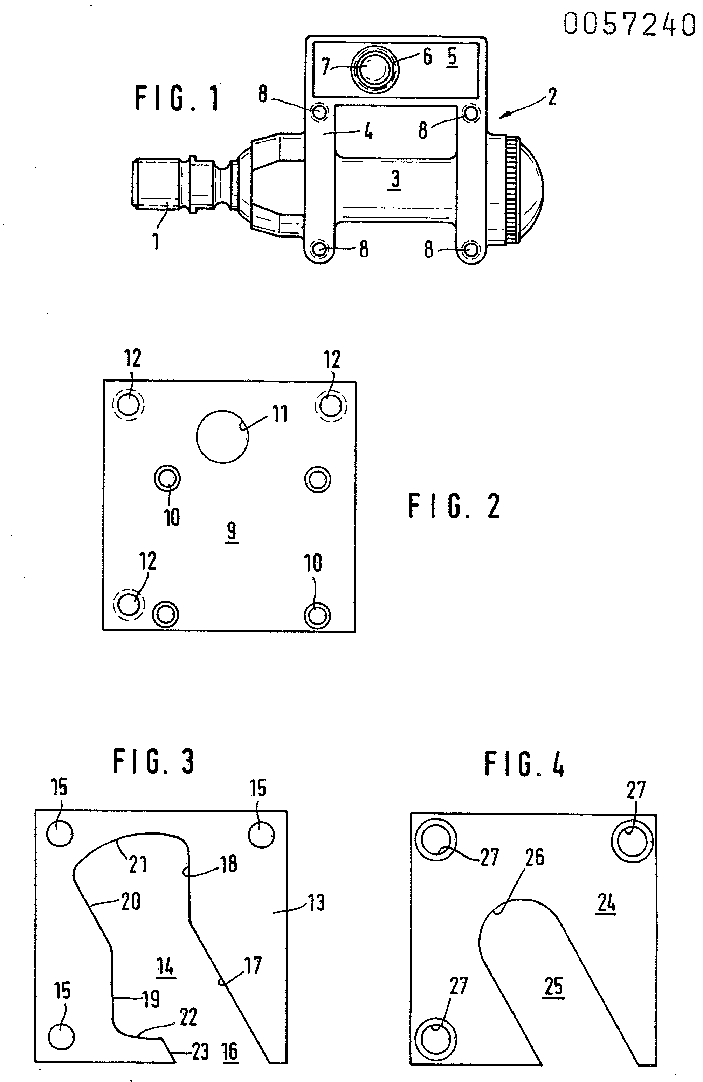

Bei dem Beispiel nach Fig. 1 bis 7 ist ein als Ganzes mit 2 bezeichnetes Tragelement des Pedals drehbar um eine in die Tretkurbel eines Fahrrades einzuschraubende Pedalachse 1 gelagert, das aus einer Wälzlager aufnehmenden Lagerhülse 3 und einem mit dieser fest verbundenen, vorzugsweise aus einem Stück bestehenden Tragrahmen 4 gebildet ist. In seinem Vorderteil bildet der Tragrahmen eine Kammer 5, in deren Boden eine Schraubhülse 6 eingeschraubt ist, die eine unter Federwirkung stehende, aus ihrem oberen Ende herausragende Rastkugel 7 enthält. Die Schraubhülse ist auf der Unterseite des Bodens 5 durch eine in Fig. 1 verdeckte und daher nicht sichtbare Gegenmutter gesichert. Der Rahmen 4 bildet eine ebene Auflagefläche, in der vier mit Gewinde versehene Befestigungslöcher 8 angebracht sind. Auf den Rahmen 4 läßt sich eine ebene Grundplatte 9 auflegen, die vier versenkte Durchgangslöcher 10 enthält, die auf die Befestigungslöcher 8 passen, so daß sich die Platte 9 auf den Rahmen 4 aufschrauben läßt. Man verwendet hierfür zweckmäßig Inbusschrauben. Die Grundplatte 9 enthält eine Durchgangsöffnung 11, durch welche bei auf den Rahmen 4 aufgeschraubter Grundplatte 9 die Rastkugel 7 mit der Schraubhülse 6 hindurchragt. Außerdem sind an drei Ecken der bei dem gezeichneten Beispiel quadratischen Grundplatte 9 Gewindebohrungen 12 angeordnet. Auf die Grundplatte 9 paßt eine Zwischenplatte 13, die einen Ausschnitt 14 und an drei Ecken in auf die Gewindebohrungen 12 der Grundplatte 9 passender Lage Durchgangslöcher 15 aufweist. Der Ausschnitt 14 verläuft in der Zwischenplatte 13 unter etwa 60° geneigt zu dem Plattenrand, von dem er unter Bildung einer Eingangsöffnung 16 ausgeht. Seine Seitenwandungen sind in der Weise geknickt ausgebildet, daß seine in Fig. 3 rechte Seitenwandung zunächst einen Abschnitt 17 aufweist, der die erwähnte Neigung von etwa 60° hat und an den ein Abschnitt 18 anschließt, der senkrecht zu dem die Eingangsöffnung 16 aufweisenden Plattenrand, also parallel zu den zu dem letzteren senkrecht gerichteten in Fig. 3 seitlichen Plattenrändern verläuft.

Die gegenüberliegende Wandung des Ausschnitts 14 weist einen Abschnitt 19 auf, der parallel zum Abschnitt 18 verläuft, aber dem Abschnitt 17 gegenüberliegt, während der dem Abschnitt 18 gegenüberliegende Abschnitt 20 parallel zum Abschnitt 17 gerichtet ist. Die Abschnitte 18 und 20 sind durch einen den Ausschnitt 14 nach innen begrenzenden Wandungsteil 21 verbunden, der einen Teil einer Kreiszylinderfläche darstellt, der auch ein der Eingangsöffnung 16 in Fig. 3 links benachbarter Wandungsteil 22 angehört. Die Eingangsöffnung 16 selbst ist auf der dem Abschnitt 17 gegenüberliegenden Seite durch eine zu dem Abschnitt 17 parallel verlaufende Schrägfläche 23 begrenzt.

Auf die Zwischenplatte 13 paßt eine Deckplatte 24 (Fig. 4). Diese weist einen dem Ausschnitt 14 der Zwischenplatte 13 zu überlagernden, ebenfalls unter etwa 60$^\circ$ zur Grundkante geneigten Ausschnitt 25 auf, der bei dem gezeichneten Beispiel in einer halbzylindrischen Rundung 26 endet. An drei Ecken der Deckplatte 24 befinden sich versenkte Durchgangslöcher 27, die, wenn die Grundplatte 9, die Zwischenplatte 13 und die Deckplatte 24 aufeinandergelegt sind, über den Durchgangslöchern 15 und den Gewindebohrungen 12 liegen.

Nachdem die Grundplatte 9 auf den Tragrahmen 4 aufgeschraubt ist, werden die Zwischenplatte 13 und die Deckplatte 24 durch durch die Löcher 27 und 15 hindurchzusteckende und in die Gewindebohrungen 12 einzuschraubende Befestigungsschrauben 28 mit versenktem Kopf zu einer Einheit miteinander verbunden, vergl. Fig. 5. Diese Einheit bildet mit dem Tragelement 2 den unteren Teil des Pedals. In dieser Einheit bildet der Ausschnitt 14 der Zwischenplatte 13 eine Aussparung für einen in diese einzuschiebenden Schlitten eines im folgenden näher beschriebenen oberen Pedalteils.

Der Schlitten 29 hat in Querrichtung die Breite b, die der Weite der Eingangsöffnung 16 entspricht, so daß er sich, da er nicht höher ist als die Zwischenplatte 13 dick ist, durch diese Eingangsöffnung einschieben läßt. An seinen Enden ist der Schlitten durch Zylinderabschnitte 30 begrenzt, die einem Kreiszylinder desselben Durchmessers angehören, wie die Wandabschnitte 21, 22 in der Zwischenplatte 14. In Fig. 6 ist der Zylinder strichpunktiert eingezeichnet. Der Schlitten 29 trägt einen mittleren zylindrischen Ansatz 31, der seinerseits einen einseitigen segmentförmigen Ansatz 32 aufweist. Auf einer Seite des mittleren Ansatzes 32 enthält der Schlitten eine Rastöffnung 33 für die durch die Oberseite der Grundplatte 9 hindurchragende Rastkugel 7. Mittels einer Schraube 34 und einer zugehörigen Mutter 35 ist mit dem Schlitten 29 ein Schuhhalter 36, der auf der Stirnfläche des mittleren Ansatzes 31 aufliegt, fest verbunden. Ein Paßteil 37, der unter den Kopf der Schraube 34 gelegt ist und einerseits an dem einseitigen Ansatz 32 anliegt, andererseits Ansätze des Schuhhalters passend umschließt, trägt zur besonderen Drehsicherheit der Verbindung bei. Während der Schlitten mit den mit ihm aus einem Stück bestehenden Teilen zweckmäßig aus Metall, z. B. Messing hergestellt ist, besteht der Schuhhalter vorzugsweise aus Kunststoff. Er wird mit der Sohle des Rennfahrerschuhs durch Schrauben verbunden, die durch in dem Schuhhalter hierfür vorgesehene Löcher 38 hindurchgesteckt werden. Wie aus Fig. 7 hervorgeht, hat der Schuhhalter im ganzen eine leicht gekrümmte Form, wobei sein nach oben gebogenes Ende in Richtung der Schuhspitze zu liegen kommt. Gegenüber seinen Randbereichen sind in seinen mittleren Bereichen beiderseits Vertiefungen ausgespart.

Der Abstand des Randteiles 17 des Schlitzes 14 von den Abschnitten 20 und 23 des gegenüberliegenden Wandteiles entspricht der Breite b des Schlittens 29. Der Schlitten, der mit dem an ihm befestigten Schuhhalter den oberen Pedalteil bildet, läßt sich also in die in dem unteren Pedalteil durch den Ausschnitt 14 gebildete Ausnehmung einschieben. Wenn er soweit eingeschoben ist, daß seine in der Einschubrichtung vordere zylindrische Begrenzungsfläche an der Begrenzungswand 21 des Ausschnittes 14 anliegt, liegt seine hintere zylindrische Begrenzung vor dem zylindrischen Wandabschnitt 22 des Ausschnittes 14. Daher läßt sich nunmehr der eingeschobene Schlitten bezogen auf Fig. 3 und 4 im Uhrzeigersinn soweit verschwenken, bis seine seitlichen Wandungen an den Wandflächenabschnitten 18 und 19 des Ausschnittes 14 anliegen. In dieser Stellung werden nach vorn oder hinten gerichtete Tretkräfte oder Gegenkräfte des Fahrers formschlüssig über die Zwischenplatte 13 auf die ganze untere Pedaleinheit mit ihrem um die Achse 1 schwenkbar gelagerten Hülsenteil 3 übertragen. Wegen der im ganzen gesehen etwa $60^{\circ}$ betragenden Neigung der Ausschnitte 14 und 25 beträgt der Verschwenkungswinkel aus der Einschieblage in die Mitnahmelage etwa $30^{\circ}$. Um diesen Betrag muß nach rückwärts verschwenkt werden, wenn die Verbindung durch Herausziehen des Schlittens aus dem Ausschnitt 14 gelöst werden soll, wie es beim Absteigen oder bei Zwischenfällen und Unfällen erforderlich ist. Die geringe Drehung erfordert keine erheblichen Querkräfte, so daß das Lösen bei der bei Zwischenfällen nahezu unbewußt herbeigeführten Lageänderung des Fußes halb selbsttätig erfolgt. Die Steilheit der Neigung des Einführungsschlitzes, derart, daß sein Verlauf von der Fahrtrichtung nur wenig abweicht, trägt also bei der Benutzung zur Erhöhung der Sicherheit bei.

Da der Hohlraum, in den der Schlitten eingeschoben wird, durch den Ausschnitt 14 einer besonderen Zwischenplatte gebildet ist, läßt sich seine verhältnismäßig komplizierte Begrenzung als Plattenausschnitt einfach herstellen.

Nachzutragen ist noch, daß die beiden Enden des Schlittens, wenn dieser in die Fahrstellung verschwenkt ist, die Deckplatte 24 untergreifen, wodurch der obere Pedalteil gegen Abheben vom unteren gesichert ist, ferner daß die Fahrstellung diejenige ist, in der die Kugel 7 in das Loch 33 einrastet.

Abwandlungen ergeben sich, wenn mehrere Rastkugeln für jede der beiden Stellungen des Schlittens 24 vorgesehen sind, oder z. B. eine für die Fahrstellung und eine für die Lösestellung, oder wenn die Rastkugeln durch andere bedingt rastende Elemente ersetzt werden. Eine zweite Rastkugel kann durch die Grundplatte 9 z. B. an einer Stelle hindurchgreifen, die innerhalb des Ausschnittes 14 der Zwischenplatte 13 nahe deren Eingangsöffnung 16 liegt und in der Fahrstellung in eine der Rastöffnung 33 im Schlitten 29 entsprechende zweite Rastöffnung eingreift, die den in Fig. 6 und 7 unteren Teil des Schlittens 29 durchsetzt. Statt der Rastkugeln können z. B. auf Blattfedern angebrachte, am Ende halbkugelförmig abgerundete Bolzen verwendet sein, deren halbkugelige Enden an Stelle der Kugeln 7 durch die Grundplatte 9 bzw. 9' hindurch in den Einsteckraum eingreifen, der für den Schlitten 29 durch den Ausschnitt 14 der Zwischenplatte 13 gebildet ist. Schließlich ist es auch möglich, die Einsteckverbindung zwischen dem unteren und dem oberen Pedalteil so auszubilden, daß umgekehrt wie bei dem beschriebenen Beispiel der untere Pedalteil den Einschiebschlitten trägt oder bildet, während der obere Pedalteil die Einschieböffnung enthält.

Die Neigung der Ausschnitte 14 und 25 ist für die auf entgegengesetzten Seiten des Rades befindlichen Pedale entgegengesetzt zu wählen. Bei dem gezeichneten Beispiel ist die Neigung für das rechte Pedal gezeigt. Die Neigungsrichtung ist also nach vorn dem Radrahmen zugekehrt, so daß die Lösestellung durch eine leichte Drehung des Fußes des Fahrers mit der Ferse nach außen herbeigeführt werden kann.

Bei dem Beispiel nach Fig. 8 ist die untere Pedaleinheit nicht, wie bei dem Beispiel nach Fig. 1 bis 7, um eine in den Tretkurbelarm eingeschraubte Pedalachse 1 drehbar gelagert, sondern mit einem Drehzapfen 1' in einem Wälzlager 41, das im Ende eines Kurbelarmes 39 untergebracht ist. In Fig. 8 ist das Wälzlager als Zylinderwalzenlager schematisch dargestellt. Es könnte auch durch ein auch Axialkräfte ausreichend aufnehmendes Kugellager ersetzt sein. Der Lagerzapfen 1' geht in eine Abkröpfung 40 über, von der die Grundplatte 9' der unteren Pedaleinheit abgewinkelt ist, auf welcher die Zwischenplatte 13 und die Deckplatte 24 in der beim ersten Ausführungsbeispiel beschriebenen Weise angebracht sind. Die Anordnung ist so getroffen, daß der Schwerpunkt der unteren Pedaleinheit unterhalb der geometrischen Drehachse 47 und außerdem so liegt, daß sich die Grundplatte 9' mit den auf ihr angebrachten Teilen der unteren Pedaleinheit selbsttätig wenigstens annähernd waagerecht einstellt.

Anstelle der im Zusammenhang mit dem ersten Ausführungsbeispiel beschriebenen Rastkugel 7 ist hier ein Rastbolzen 44 vorgesehen, der am freien Ende einer Blattfeder 42 befestigt, z. B. aufgenietet ist, die ihrerseits bei 43 gegen die untere Fläche der Grundplatte 9' angenietet ist. Der Zapfen 44 greift durch eine Bohrung 46 mit seinem halbkugelförmig ausgebildeten Ende 45 in den Einsteckraum ein, der durch den Ausschnitt 14 in der Zwischenplatte 13 gebildet ist. Gegenüber dieser einfacheren Rastausbildung hat diejenige mit einer in eine eine Wendelfeder enthaltende Schraubhülse 6 eingesetzten Rastkugel 7 den Vorteil, daß die Federspange und damit die Rastkraft durch verschieden weites Einschrauben der Hülse einstellbar ist.

Patentansprüche

1. Pedal für Rennfahrräder mit Tretkurbel, gekennzeichnet durch die Aufteilung in zwei die Antriebskraft vom Fuß des Fahrers auf die Tretkurbel übertragende, leicht lösbar miteinander verbundene Einheiten (4 mit 9, 13 und 24 bzw. 9' mit 13 und 24; 29 mit 36), von denen die erste, untere um eine rechtwinklig zum Tretkurbelarm verlaufende geometrische Achse drehbar gelagert ist, während die zweite, obere (29 mit 36), für die Befestigung am Schuh des Fahrers, z. B. an die Schuhsohle anschraubbar ausgebildet ist, sowie dadurch, daß die Verbindung beider Einheiten als Einsteckrastverbindung derart ausgebildet ist, daß sie im eingesteckten Zustand zwei Lagen der Einheiten zueinander ermöglicht, nämlich eine erste Lage der Einheiten zueinander (Fahrlage), in der die Einheiten in beiden Richtungen quer zur Pedaldrehachse formschlüssig verbunden sind, und eine zweite Lage der Einheiten zueinander (Trennlage) in der die Einheiten wenigstens in einer Richtung unter Überwindung der Rastkraft voneinander trennbar sind.

2. Pedal nach Anspruch 1, dadurch gekennzeichnet, daß eine Grundplatte (9) der unteren Einheit (4 mit 9, 13 und 24) auf einem Tragrahmen (4) befestigt ist, der mit einer Wälzlager aufnehmenden Lagerhülse (3) fest verbunden ist, vorzugsweise aus einem Stück besteht, die um eine im Tretkurbelarm befestigte, vorzugsweise eingeschraubte Pedalachse (1) drehbar ist.

3. Pedal nach Anspruch 1, dadurch gekennzeichnet, daß eine Grundplatte (9') der unteren Einheit von einem an einer Abkröpfung (40) angebrachten Lagerzapfen (1') abgewinkelt ist, der im Ende eines Tretkurbelarmes (39) in einem Wälzlager, vorzugsweise Zylinderwalzenlager (41) gelagert ist, wobei der Schwerpunkt der unteren Einheit in einer durch die geometrische Drehachse (47)

des Lagerzapfens (1') gelegte, auf der Grundplatte (9') senkrechten Ebene oder dieser möglichst nahe und außerdem in einem Abstand unterhalb dieser geometrischen Drehachse (47) liegt.

4. Pedal nach Anspruch 1 und 2 oder 1 und 3, dadurch gekennzeichnet, daß die Einsteckrastverbindung für das Übergehen aus der Fahrlage in die Trennlage durch Verschwenken der oberen Einheit (29 mit 36) gegenüber der unteren Einheit (4 mit 9, 13 und 24) bei ineinander gesteckten Einheiten eingerichtet ist.

5. Pedal nach Anspruch 4, dadurch gekennzeichnet, daß die Trennlage der oberen Einheit gegenüber der unteren im Vergleich zur Fahrlage einer Verschwenkung der oberen Einheit (29 mit 36) gegenüber der unteren mit ihrem hinteren Teil nach außen um etwa 30$^{\text{o}}$ entspricht, so daß sich für die Pedale zu beiden Seiten des Rahmens entgegengesetzte Verschwenkungsrichtungen ergeben.

6. Pedal nach Anspruch 4 und 5, dadurch gekennzeichnet, daß die zweite, mit der Sohle des Fahrerschuhs zu verbindende Einheit (29 mit 36) einen in einen Ausschnitt (14) der ersten Einheit (4 mit 9, 13 und 24) einschiebbaren und in diesem Ausschnitt (14) bei eingeschobener Stellung in eine die formschlüssige Verbindung ergebende Verriegelungslage (Fahrlage) verschwenkbaren Schlitten (29) trägt, der in der Fahrlage, vorzugsweise auch in der Einschieb-Endstellung (Trennlage) durch eine federnde Rast (7, 33) gehalten ist.

7. Pedal nach Anspruch 4 bis 6, dadurch gekennzeichnet, daß die untere Pedaleinheit (4 mit 9, 13 und 24) aus auf einem um die Pedalachse (1) drehbar gelagerten Tragelement (2) befestigten, aufeinander gelegten Platten, nämlich einer Grundplatte (9), einer Zwischenplatte (13) und einer Deckplatte (24) besteht, und daß in

0057240

der Zwischenplatte (13) ein den Hohlraum zwischen Grundplatte (9) und Deckplatte (24) für die Einsteckverbindung bildender, eine Eingangsöffnung (16) aufweisender Ausschnitt (14) angebracht ist, der von einem Ausschnitt (25) in der Deckplatte (26) teilweise überlagert ist, wobei die Hauptrichtung der Ausschnitte (14, 25) der Ausschwenkungslage der oberen Pedaleinheit (29 mit 36) entspricht.

8. Pedal nach Anspruch 4 bis 7, dadurch gekennzeichnet, daß der Ausschnitt (14) in der Zwischenplatte (13) an seinem inneren Ende durch einen Zylinderwandabschnitt (21) begrenzt ist, dem neben der Eingangsöffnung (16) ein zu demselben Zylindermantel gehörender Abschnitt (22) gegenüberliegt, wobei die Endflächen (30) des Schlittens (29), abgesehen vom notwendigen Bewegungsspiel, demselben Zylindermantel angehören, und daß die Seitenwände des Ausschnitts (14) Abschnitte aufweisen, die einerseits in der um etwa 30$^{\circ}$ nach rückwärts und außen geneigten Ausschwenklage der oberen Pedaleinheit (29 mit 36) verlaufen, nämlich einen auf der einen Seite der Eingangsöffnung (16) beginnenden Abschnitt (17), einen auf der anderen Seite der Eingangsöffnung (16) liegenden kurzen Abschnitt (23) und einen ebenfalls auf dieser anderen Seite nahe deren innerem Ende liegenden Abschnitt (20), während die übrigen Wandabschnitte (18, 19) auf einander gegenüberliegenden Seiten versetzt zueinander liegende Anschlagflächen für den Schlitten (29) bilden, wobei die Abstände sowohl der erstgenannten Abschnitte als auch der zuletzt genannten Abschnitte voneinander der Schlittenbreite (b) entsprechen.

9. Pedal nach Anspruch 1 und 2 oder 1 und 3 oder einem der folgenden, dadurch gekennzeichnet, daß der mit der Sohle des Fahrerschuhs zu verbindende Teil (36) aus Kunststoff und der mit ihm fest verbundene Schlitten

0057240

(29) aus nichtrostendem Metall, z. B. Messing, besteht.

10. Pedal nach Anspruch 1 und 2 oder 1 und 3 oder einem der folgenden, dadurch gekennzeichnet, daß die Rasten als Kugelrasten (7, 33) ausgebildet und die Rastkugeln (7) durch den von der Grundplatte (9) gebildeten Boden des Einsteckhohlraumes hindurchragen.

11. Pedal nach Anspruch 10, dadurch gekennzeichnet, daß nur eine Rastkugel (7) vorgesehen ist, die in den beiden Lagen des Schlittens (29) mit je einem von zwei ihr in diesem zugeordneten Löchern (33) zusammenwirkt.

0057240

**FIG. 1**

**FIG. 2**

**FIG. 3**

**FIG. 4**

P 2584

FIG. 5

FIG. 6

FIG. 7

# FIG. 8

Europäisches
Patentamt

**EUROPÄISCHER RECHERCHENBERICHT**

0057240

Nummer der Anmeldung

EP 81 10 0726

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>FR - A - 2 432 427</u> (RIGHEZZA) <br> * Abbildungen 1-17; Seite 2, Zeilen 26-40; Seiten 3,4 * | 1,4,6 |
| | -- | |
| | <u>WO - A - 80/01056</u> (BADERSBACH) <br> * Abbildungen 1-21; Seite 6, Zeilen 5-40; Seiten 7-12 * | 1,4 |
| | -- | |
| | <u>FR - A - 2 401 823</u> (DURAN) <br> * Abbildungen 1-5; Seite 3, Zeilen 13-30; Seiten 4,5 * | 1,4 |
| | -- | |
| | <u>FR - A - 2 449 587</u> (LOTTEAU) <br> * Abbildungen 1-5; Seiten 5-10 * | 1,4 |
| | -- | |
| | <u>FR - A - 2 279 607</u> (GORMAND) <br> * Abbildungen 1-5; Seite 3, Zeilen 18-40; Seiten 4,5 * | 1,4 |
| | ---- | |

**KLASSIFIKATION DER ANMELDUNG (Int. Cl.)**

B 62 M 3/08

**RECHERCHIERTE SACHGEBIETE (Int. Cl.)**

B 62 M

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-10-1981 | VANNESTE |

EPA form 1503.1   06.78